# EUROPÄISCHE PATENTSCHRIFT

(11) **EP 1 177 270 B1**
(45) Veröffentlichungstag und Bekanntmachung des Hinweises auf die Patenterteilung: **18.06.2003**
(21) Anmeldenummer: 00929328.3
(22) Anmeldetag: 28.03.2000
(51) Int. Cl.: C10M 133/04, C10M 133/54, C10M 133/06, C10M 133/38, C10M 133/58, C10L 1/22, C07C 209/16, C07C 209/18, C10N 30/04

(54) **POLYALKENALKOHOL-POLYETHERAMINE UND DEREN VERWENDUNG IN KRAFT- UND SCHMIERSTOFFEN**
POLYALKENE ALCOHOL POLYETHERAMINES AND USE THEREOF IN FUELS AND LUBRICANTS
POLYALCENE-ALCOOL-POLYETHERAMINES ET LEUR UTILISATION DANS LES CARBURANTS ET LES LUBRIFIANTS

(30) Priorität: 13.04.1999 DE 19916512
(43) Veröffentlichungstag der Anmeldung: 06.02.2002
(73) Patentinhaber: BASF AKTIENGESELLSCHAFT, 67056 Ludwigshafen (DE)
(72) Erfinder: OPPENLÄNDER, Knut, D-67061 Ludwigshafen (DE); GÜNTHER, Wolfgang, D-67582 Mettenheim (DE); POSSELT, Dietmar, D-69120 Heidelberg (DE); MASSONNE, Klemens, D-67368 Westheim (DE); RATH, Hans, Peter, D-67269 Grünstadt (DE)
(86) Internationale Anmeldenummer: EP0002714
(87) Internationale Veröffentlichungsnummer: WO00061708

(56) Entgegenhaltungen:
- EP-A- 0 310 875
- EP-A- 0 440 248
- EP-A- 0 448 365
- EP-A- 0 696 572
- WO-A-00/50543

## Beschreibung

Die vorliegende Erfindung betrifft spezielle Polyalkenalkohol-Polyetheramine, deren Verwendung als Trägeröle, Detergenzien oder Dispergatoren in Kraft- und Schmierstoffzusammensetzungen sowie Kraft- und Schmierstoffadditiv-Konzentrate und Kraft- und Schmierstoffzusammensetzungen selbst, welche diese Polyalkenalkohol-Polyetheramine enthalten.

Vergaser und Einlaßsysteme von Ottomotoren, aber auch Einspritzsysteme für die Kraftstoffdosierung, werden in zunehmendem Maße durch Verunreinigungen belastet, die durch Staubteilchen aus der Luft, unverbrannte Kohlenwasserstoffreste aus dem Brennraum und die in den Vergaser geleiteten Kurbelwellengehäuseentlüftungsgase verursacht werden.

Diese Rückstände verschieben das Luft-Kraftstoff-Verhältnis im Leerlauf und im unteren Teillastbereich, so daß das Gemisch magerer, die Verbrennung unvollständiger und wiederum die Anteile unverbrannter oder teilverbrannter Kohlenwasserstoffe im Abgas größer werden und der Benzinverbrauch steigt.

Es ist bekannt, daß zur Vermeidung dieser Nachteile Kraftstoffadditive zur Reinhaltung von Ventilen und Vergaser bzw. Einspritzsystemen von Ottomotoren verwendet werden (vgl. z.B.: M. Rossenbeck in Katalysatoren, Tenside, Mineralöladditive, Hrsg. J. Falbe, U. Hasserodt, S. 223, G. Thieme Verlag, Stuttgart 1978).

Als derartige Kraftstoffadditive kommen häufig Polyisobutenamine, wie sie beispielsweise in der EP-A 244 616 beschrieben sind, oder Polyetheramine, wie sie beispielsweise in der EP-A 310 875, der EP-A 448 365 oder der EP-A 440 248 beschrieben sind, zum Einsatz.

Die Klasse der Polyisobutenamine ist zwar im allgemeinen gut wirksam, oft verursachen sie jedoch - je nach Kettenlänge des Poly(iso)buten-Teils im Molekül, nach Motortyp und nach Anwendungskonzentration des Additivs - das sogenannte "Ventilstecken", welches zum totalen Motorausfall führen kann. Unter "Ventilstekken" versteht man den vollständigen Kompressionsverlust auf einem oder mehreren Zylindern des Verbrennungsmotors, wenn - verursacht durch Polymerablagerungen am Ventilschaft - die Federkräfte nicht mehr ausreichen, die Ventile ordnungsgemäß zu schließen.

Polyetheramine zeigen im allgemeinen zwar ebenfalls eine gute Wirksamkeit, ihre Einsetzbarkeit unterliegt aber gewissen Einschränkungen. Durch die polare Polyetherkette kann die Löslickeit im unpolaren Kraftstoff vermindert werden. Zur Kompensation müssen dann entweder langkettige Alkanole als Startermoleküle bei der Herstellung der Polyetheramine eingesetzt werden, die technisch nur begrenzt verfügbar sind, oder aber es müssen längerkettige Epoxide wie Butylenoxide, Pentenoxide oder Cyclohexenoxid zum Aufbau der Polyetherkette verwendet werden, was mit deutlich höheren Kosten verbunden ist.

Aufgabe der vorliegenden Erfindung war es daher, Mineralöladditive, insbesondere Detergentien, für Schmier- und insbesondere Kraftstoffzusammensetzungen bereitzustellen, die die geschilderten Probleme des Standes der Technik nicht mehr aufweisen.

Demgemäß wurden Polyalkenalkohol-Polyetheramine der allgemeinen Formel I

R¹-(CH₂)ₙ-(O-A)ₘ-NR²R³ (I)

in der
- R¹: für einen von Isobuten und bis zu 20 Gew.-% n-Buten abgeleiteten Polybutyl- oder Polyisobutylrest mit einem Zahlengemittelten Molekulargewicht von 300 bis 2500 steht,
- R² und R³: gleich oder verschieden sein können und für Wasserstoff, aliphatische oder aromatische Kohlenwasserstoffreste, primäre oder sekundäre, aromatische oder aliphatische Aminoalkylenreste oder Polyaminoalkylenreste, Polyoxyalkylenreste, Heteroaryl- oder Heterocyclylreste stehen, oder gemeinsam mit dem Stickstoffatom, an das sie gebunden sind, einen Ring bilden, in dem noch weitere Heteroatome vorhanden sein können, wobei die maximale Anzahl der Kohlenstoffatome in R² und R³ zusammen 400 beträgt,
- A: 1,2-Propylen und/oder 1,2-Butylen bezeichnet,
- m: eine Zahl von 10 bis 45 bedeutet und
- n: die Zahl 0 oder 1 bezeichnet,
gefunden.

Das dem Kohlenwasserstoffrest R¹ zugrundeliegende Polyalken ist durch Oligo- oder Polymerisation dieser Alkene erhältlich, wobei die Oligo- bzw. Polymerisation in der Regel (beispielsweise durch kationische oder koordinative Oligo- bzw. Polymerisation) so geführt wird, daß der Kettenabbruch zu einer Doppelbindung führt, welche weiter zum entsprechenden Polyalkenalkohol funktionalisiert werden kann.

R¹ steht für einen von Isobuten und bis zu 20 Gew.-% n-Buten abgeleiteten Polybutyl- oder Polyisobutylrest mit einem zahlengemittelten Molekulargewicht (M_{N}) von 300 bis 2500. Besonders bevorzugt wird für R¹ ein Polybutyl- oder Polyisobutylrest mit einem zahlengemittelten Molekulargewicht von 350 bis 1500, insbesondere 400 bis 850, vor allem 450 bis 700. Vorzugsweise ist der Rest R¹ auch allein aus Isobuten-Einheiten aufgebaut.

Der Rest R¹ kann vorzugsweise auf hochreaktivem Polyisobuten (mit Doppelbindungen überwiegend in der α-Position) basieren, welches - wie in der EP-A 277 345 beschrieben - durch Hydroformylierung in den entsprechenden Alkohol R¹-CH₂-OH (n = 1) umgewandelt werden kann. Im Falle n = 0 geht man bei der Herstellung entsprechender Polybuten- oder Polyisobutenalkohole üblicherweise von Polybutenen oder Polyisobutenen mit Doppelbindungen, welche sich überwiegend weiter innen in der Polymerkette (beispielsweise in der β-und γ-Position) befinden, aus; diese werden dann üblicherweise entweder durch Ozonolyse und nachfolgende Reduktion oder durch Epoxidierung und nachfolgende Reduktion oder durch Hydroborierung und nachfolgende Hydrolyse oder durch Halogenierung mit Chlor oder Brom und nachfolgende alkalische Hydrolyse in die Poly(iso)butenalkohole umgewandelt.

Die maximale Anzahl an Kohlenstoffatomen in den Resten R² und R³ zusammen beträgt vorzugsweise 200, insbesondere 100, vor allem 30. Bei Anwesenheit von Stickstoffatomen in den Resten R² und R³ beträgt deren maximale Anzahl zusammen vorzugsweise 20, insbesondere 10, vor allem 5. Bei Anwesenheit von Sauerstoffatomen in den Resten R² und R³ beträgt deren maximale Anzahl zusammen 60, insbesondere 20, vor allem 10.

Nach einer bevorzugten Ausführungsform sind R² und R³ gleich oder verschieden und stehen jeweils für Wasserstoff, Alkyl, Aryl, Hydroxyalkyl, einen Aminoalkylenrest der allgemeinen Formel III

-R⁴-NR⁵R⁶ (III)

worin R⁴ für einen Alkylenrest steht und R⁵ und R⁶, die gleich oder verschieden sind, für Wasserstoff, Alkyl, Aryl, Hydroxyalkyl oder einen Polybuten- oder Polyisobutenrest stehen, einen Polyaminoalkylenrest der allgemeinen Formel IV

[-R⁴-NR⁵]ₚR⁶ (IV)

worin die Reste R⁴ und die Reste R⁵ jeweils gleich oder verschieden sind, die Reste R⁴, R⁵ und R⁶ die zuvor genannten Bedeutungen besitzen und p für eine Zahl von 2 bis 8 steht, oder einen Polyoxyalkylenrest der allgemeinen Formel V

[-R⁴-O]_{q}-X (V)

worin die Reste R⁴ jeweils gleich oder verschieden sind und die vorstehende Bedeutung besitzen, X für Alkyl oder H steht und q eine Zahl von 1 bis 30 darstellt, oder R² und R³ bilden zusammen mit dem Stickstoffatom, an das sie gebunden sind, einen Morpholinylrest, Pyridylrest, Piperidylrest, Pyrrolylrest, Pyrimdinylrest, Pyrrolinylrest, Pyrrolidinylrest, Pyrazinylrest oder Pyridazinylrest.

Nach einer besonders bevorzugten Ausführungsform sind R² und R³ gleich oder verschieden und stehen jeweils für Wasserstoff, C₁-C₁₀-Alkyl, Phenyl, Naphthyl, C₁-C₁₀-Hydroxyalkyl, einen Aminoalkylenrest der allgemeinen Formel III

-R⁴-NR⁵R⁶ (III)

worin R⁴ für einen C₂-C₁₀-Alkylenrest steht und R⁵ und R⁶, die gleich oder verschieden sind, für Wasserstoff, C₁-C₁₀-Alkyl, Phenyl, Naphthyl, C₁-C₁₀-Hydroxyalkyl oder einen Polybuten- oder Polyisobutenrest mit jeweils 20 bis 398, vor allem 30 bis 180 Kohlenstoffatomen stehen, einen Polyaminoalkylenrest der allgemeinen Formel IV

[-R⁴-NR⁵]ₚR⁶ (IV)

worin die Reste R⁴ und die Reste R⁵ jeweils gleich oder verschieden sind, die Reste R⁴, R⁵ und R⁶ die zuvor genannten Bedeutungen besitzen und p für eine Zahl von 2 bis 8 steht, oder einen Polyoxyalkylenrest der allgemeinen Formel VI

[-R⁴-O]_{q}-H (VI)

worin die Reste R⁴ jeweils gleich oder verschieden sind und die vorstehende Bedeutung besitzen und q eine Zahl von 1 bis 30 darstellt, oder R² und R³ bilden zusammen mit dem Stickstoffatom, an das sie gebunden sind, einen Morpholinylrest.

Nach einer weiteren besonders bevorzugten Ausführungsform steht bei den erfindungsgemäßen Polyalkenalkohol-Polyetheraminen I der Rest R² für Wasserstoff und der Rest R³ bedeutet ebenfalls Wasserstoff oder einen Alkylrest mit insgesamt 2 bis 8 C-Atomen, welcher noch 1 bis 4 primäre, sekundäre und/oder tertiäre Stickstoffatome enthält.

Als einzelne Reste für R² und R³ kommen beispielsweise Methyl, Ethyl, n-Propyl, iso-Propyl, n-Butyl, iso-Butyl, sec.-Butyl, tert.-Butyl, n-Pentyl, iso-Pentyl, sec.-Penty, tert.-Pentyl, neoPentyl, n-Hexyl, n-Heptyl, n-Octyl, 2-Ethylhexyl, n-Nonyl, iso-Nonyl, n-Decyl, n-Undecyl, iso-Undecyl, n-Dodecyl, n-Tridecyl, iso-Tridecyl, n-Tetradecyl, n-Hexadecyl, n-Octadecy, n-Eicosyl, Cyclopentyl, Cyclohexyl oder Phenyl in Betracht. Typische stickstoffhaltige Reste für R² und R³ sind die entsprechenden Reste der Polyamine Dimethylaminopropylamin, 1,2-Ethylendiamin, Diethylentriamin, Triethylentetramin und Tetraethylenpentamin, wobei über eine der primären Aminfunktionen dieser Polyamine das zugrundeliegende Polyalkenalkohol-Polyalkoxylat der Formel R¹-(CH₂)ₙ-(O-A)ₘ-OH zum Polyalkenalkohol-Polyetheramin I umgesetzt ist. Hydroxylgruppenhaltige Polyamine, die ebenfalls über eine primäre Aminfunktion an das zugrundeliegende Polyalkenalkohol-Polyalkoxylat angebunden sind, vor allem Verbindungen der Formel [-CH₂-CH₂-NH]ᵣ-CH₂-CH₂-OH, worin r für eine Zahl von 1 bis 7, insbesondere 1, 2 oder 3, steht, sind hier ebenfalls geeignet. Typische sauerstoffhaltige Reste für R² und R³ sind Verbindungen der Formel [-CH₂-CH₂-O]ₛ-CH₂-OH, worin s für eine Zahl von 0 bis 30, insbesondere 1 bis 15, steht.

Der Alkoxylierungsgrad m hängt von der Molmasse des Polyalkenalkohols ab und beträgt 10 bis 45, vor allem 20 bis 35 Alkylenoxid-Einheiten.

Die Alkylengruppe A leitet sich von den entsprechenden Alkylenoxiden Propylenoxid oder 1,2-Butylenoxid ab. A stellt 1,2-Propylengruppen, 1,2-Butylengruppen und Mischungen hieraus dar.

In einer bevorzugten Ausführungsform leiten sich die erfindungsgemäßen Polyalkenalkohol-Polyetheramine I von Polyalkenalkohol-Polyalkoxylaten der Formel II

R¹-(CH₂)ₙ-(O-A)ₘ-OH (II)

in der die Variablen R¹, A, m und n die oben genannte Bedeutung haben, ab mit der Maßgabe, daß der Sauerstoff im Oxalkylatrest A-(O-A)ₘ₋₁-OH mindestens 16,5 Gew.-%, insbesondere 17,5 Gew.-%, vor allem 18,5 Gew.-%, des zahlengemittelten Molekulargewichts des Gesamtmoleküls der Verbindungen II ausmacht.

In einer weiteren bevorzugten Ausführungsform ist die Molmasse des Oxalkylatrestes -A-(O-A)ₘ₋₁-OH im Polyalkenalkohol-Polyalkoxylat II größer als die Molmasse des zugrundeliegenden Polyalkenalkohols R-(CH₂)ₙ-OH. Die Molmasse des Oxalkylatrestes -A-(O-A)ₘ₋₁-OH im Polyalkenalkohol-Polyalkoxylat II beträgt insbesondere das 1,5 bis 5fache, vor allem das 2 bis 4fache, der Molmasse des zugrundeliegenden Polyalkenalkohols R-(CH₂)ₙ-OH. Die Molmassenberechnungen beziehen sich auf die zahlengemittelten Molekulargewichte.

Die erfindungsgemäßen Polyalkenalkohol-Polyetheramine I und die zugrundeliegenden Polyalkenalkohol-Polyalkoxylate II lassen sich nach üblichen Methoden herstellen. Die Polyalkenalkohol-Polyalkoxylate II erhält man beispielsweise durch Umsetzung der zugrundeliegenden Polyalkenalkohole R¹-(CH₂)ₙ-OH mit der entsprechenden Menge an Alkylenoxid in Gegenwart von geeigneten Katalysatoren wie Kaliumhydroxid, vorzugsweise in einer Menge von 0,01 bis 1 Gew.-%, insbesondere 0,05 bis 0,5 Gew.-% Kaliumhydroxid, bezogen auf die Menge des zu erwartenden Umsetzungsproduktes. Typische Umsetzungstemperaturen liegen bei 70 bis 200°C, insbesondere bei 100 bis 160°C. Der Druck beträgt üblicherweise 3 bis 30 bar. Das Umsetzungsprodukt kann wie üblich durch Ausgasen flüchtiger Bestandteile im Vakuum und gegebenenfalls durch Filtration aufgearbeitet werden.

Die Polyalkenalkohol-Polyetheramine I stellt man in der Regel aus den Verbindungen II durch reduktive Aminierung mit Ammoniak, Monoaminen oder Polyaminen nach üblichen Methoden in kontinuierlichen oder diskontinuierlichen Verfahren unter Verwendung hierfür üblicher Hydrier- bzw. Aminierungskatalysatoren wie beispielsweise solchen, die katalytisch aktive Bestandteile auf Basis der Elemente Ni, Co, Cu, Fe, Pd, Pt, Ru, Rh, Re, Al, Si, Ti, 2r, Nb, Mg, 2n, Ag, Au, Os, Ir, Cr, Mo, W oder Kombinationen dieser Elemente untereinander enthalten, in üblichen Mengen her. Typische Umsetzungsbedingungen sind Temperaturen von etwa 80°C bis 300°C und Drücke von bis zu ca. 600 bar.

Die erfindungsgemäßen Polyalkenalkohol-Polyetheramine I eignen sich in hervorragender Weise als Trägeröle, Dispergatoren und insbesondere als Detergentien in Schmier- und insbesondere Kraftstoffzusammensetzungen, vor allem Ottokraftstoffzusammensetzungen.

Die Verbindungen I können hierbei auch in vorteilhafter Weise zusammen mit anderen üblichen Detergentien eingesetzt werden. Solche üblichen Detergentien sind beispielsweise:
a) Polyisobutenamine, welche gemäß der EP-A 244 616 durch Hydroformylierung von hochreaktivem Polyisobuten und anschließende reduktive Aminierung mit Ammoniak, Monoaminen oder Polyaminen wie Dimethylenaminopropylamin, Ethylendiamin, Diethylentriamin, Triethylentetramin oder Tetraethylenpentamin erhältlich sind,
b) Poly(iso)butenamine, welche durch Chlorierung von Polybutenen oder Polyisobutenen mit Doppelbindungen überwiegend in der β-und γ-Position und anschließende Aminierung mit Ammoniak, Monoaminen oder den oben genannten Polyaminen erhältlich sind,
c) Poly(iso)butenamine, welche durch Oxidation von Doppelbindungen in Poly(iso)butenen mit Luft oder Ozon zu Carbonyl- oder Carboxylverbindungen und anschließende Aminierung unter reduzierenden (hydrierenden) Bedingungen erhältlich sind,
d) Polyisobutenamine, welche gemäß der DE-A 196 20 262 aus Polyisobutenepoxiden durch Umsetzung mit Aminen und nachfolgende Dehydratisierung und Reduktion der Aminoalkohole erhältlich sind,
e) gegebenenfalls Hydroxylgruppen enthaltende Polyisobutenamine, welche gemäß der WO-A 97/03946 durch Umsetzung von Polyisobutenen mit einem mittleren Polymerisationsgrad P = 5 bis 100 mit Stickoxiden oder Gemischen aus Stickoxiden und Sauerstoff und anschließende Hydrierung dieser Umsetzungsprodukte erhältlich sind,
f) Hydroxylgruppen enthaltende Polyisobutenamine, welche gemäß der EP-A 476 485 durch Umsetzung von Polyisobutenepoxiden mit Ammoniak, Monoaminen oder den oben genannten Polyaminen erhältlich sind,
g) Polyetheramine, welche durch Umsetzung von C₂- bis C₃₀-Alkanolen, C₆- bis C₃₀-Alkandiolen, Mono- oder Di-C₂- bis C₃₀-alkylaminen, C₁- bis C₃₀-Alkylcyclohexanolen oder C₁- bis C₃₀-Alkylphenolen mit 1 bis 30 mol Ethylenoxid und/oder Propylenoxid und/oder Butylenoxid pro Hydroxyl- bzw. Aminogruppe und anschließende reduktive Aminierung mit Ammoniak, Monoaminen oder den oben genannten Polyaminen erhältlich sind, auch Polyetheramine mit Carbamat-Struktur sind verwendbar,
h) "Polyisobuten-Mannichbasen", welche gemäß EP-A 831 141 durch Umsetzung von polyisobutensubstituierten Phenolen mit Aldehyden und Monoaminen oder den oben genannten Polyaminen erhältlich sind.

Die Verbindungen I können hierbei in vorteilhafter Weise auch zusammen mit weiteren üblichen Dispergatoren wie Imiden, Amiden, Estern und Ammonium- und Alkalimetallsalzen von Polyisobutenbernsteinsäureanhydriden, welche insbesondere Einsatz in Schmierölen, daneben aber auch als Detergentien in Kraftstoffzusammensetzungen finden, verwendet werden.

Als weitere Ottokraftstoffadditive können solche mit ventilsitzverschleißhemmender Wirkung zusammen mit den Verbindungen I eingesetzt werden; hierbei sind beispielsweise Carboxylgruppen oder deren Alkalimetall- oder Erdalkalimetallsalze enthaltende Additive wie beispielsweise Copolymere aus C₂- C₄₀-Olefinen mit Maleinsäureanhydrid mit einer Gesamt-Molmasse von 500 bis 20000, deren Carboxylgruppen ganz oder teilweise zu den Alkalimetalloder Erdalkalimetallsalzen und ein verbleibender Rest der Carboxylgruppen mit Alkoholen oder Aminen umgesetzt sind, wie sie in der EP-A 307 815 beschrieben sind, oder Sulfonsäuregruppen oder deren Alkalimetall- oder Erdalkalimetallsalze enthaltende Additive wie beispielsweise Alkalimetall- oder Erdalkalimetallsalze von Sulfobernsteinsäurealkylestern, wie sie in der EP-A 639 632 beschrieben sind, von Interesse. Solche ventilsitzverschleißhemmenden Ottokraftstoffadditive können mit Vorteil auch im Kombination mit üblichen Kraftstoffdetergenzien wie Poly(iso)butenaminen oder Polyetheraminen, wie in der WO-A 87/01126 beschrieben, eingesetzt werden.

Gegenstand der vorliegenden Erfindung sind auch Kraft- und Schmierstoffadditiv-Konzentrate, welche die erfindungsgemäßen Polyalkenalkohol-Polyetheramine I in Mengen von 0,1 bis 80, insbesondere 0,5 bis 60 Gew.-%, bezogen auf die Gesamtmenge der Konzentrate, enthalten. Diese Konzentrate enthalten üblicherweise auch weitere hierbei übliche Komponenten und Hilfsmittel.

Weitere übliche Komponenten und Hilfsmittel sind Korrosionsinhibitoren, beispielsweise auf Basis von zur Filmbildung neigenden Ammoniumsalzen organischer Carbonsäuren oder von heterocyclischen Aromaten bei Buntmetallkorrosionsschutz, Antioxidantien oder Stabilisatoren, beispielsweise auf Basis von Aminen wie p-Phenylendiamin, Dicyclohexylamin oder Derivaten hiervon oder von Phenolen wie 2,4-Di-tert.-butylphenol oder 3,5-Di-tert.-butyl-4-hydroxyphenylpropionsäure, Demulgatoren, Antistatikmittel, Metallocene wie Ferrocen oder Methylcyclopentadienylmangantricarbonyl, Schmierfähigkeitsverbesserer (Lubricity-Additive) wie bestimmte Fettsäuren, Alkenylbernsteinsäureester, Bis(hydroxyalkyl)fettamine, Hydroxyacetamide oder Ricinusöl sowie Farbstoffe (Marker). Manchmal werden auch Amine zur Absenkung des pH-Wertes des Kraftstoffes zugesetzt.

Die verbindungen I weisen neben der Detergenz- und Dispergator-Funktion in der Regel aus eine Trägeröl-Funktion, insbesondere in Kraftstoffen, auf. Als weitere übliche Komponenten und Additive kommen jedoch auch weitere übliche Trägeröle für die erfindungsgemäßen Kraft- und Schmierstoffadditiv-Konzentrate in Betracht. Hier sind beispielsweise mineralische Trägeröle (Grundöle), insbesondere solche der Viskositätsklasse "Solvent Neutral (SN) 500 bis 2000", synthetische Trägeröle auf Basis von Olefinpolymerisaten mit M_{N} = 400 bis 1800, vor allem auf Polybuten- oder Polyisobuten-Basis (hydriert oder nicht hydriert), von Polyalphaolefinen oder Polyinternalolefinen sowie synthetische Trägeröle auf Basis alkoxylierter langkettiger Alkohole oder Phenole zu nennen.

Gegenstand der vorliegenden Erfindung sind weiterhin Kraft- und Schmierstoffzusammensetzungen, insbesondere Kraftstoffzusammensetzungen, vor allem Ottokraftstoffzusammensetzungen, welche die erfindungsgemäßen Polyalkenalkohol-Polyetheramine I in wirksamen Mengen enthalten. Unter wirksamen Mengen sind in der Regel bei Kraftstoffzusammensetzungen 10 bis 5000 Gew.-ppm, insbesondere 50 bis 2000 Gew.-ppm, bei Schmierstoffzusammensetzungen 0,1 bis 10 Gew.-%, insbesondere 0,5 bis 5 Gew.-%, jeweils bezogen auf die Gesamtmenge der Zusammensetzung, zu verstehen. Die Kraft- und Schmierstoffzusammensetzungen enthalten üblicherweise neben den erfindungsgemäßen Verbindungen I als Trägeröle, Detergentien bzw. Dispergatoren die genannten weiteren hierfür üblichen Komponenten und Hilfsmittel.

Für die erfindungsgemäßen Kraftstoffzusammensetzungen kommen weiterhin insbesondere Kombinationen eines Ottokraftstoffes mit einer Mischung aus den Polyalkenalkohol-Polyetheraminen I, üblichen synthetischen Trägerölen auf Basis alkoxylierter langkettiger Alkohole oder Phenole und/oder Polyisobutenamin-Detergentien, insbesondere solchen der vorgenannten Gruppen a), b), c) oder d), sowie Korrosionsinhibitoren und/oder Schmierfähigkeitsverbesserern auf Basis von Carbonsäuren oder Fettsäuren, welche als monomere und/oder dimere Species vorliegen können, in Betracht.

Die erfindungsgemäßen Polyalkenalkohol-Polyetheramine I zeigen eine ausgezeichnete Wirkung als ventilreinigende und ventilreinhaltende Ottokraftstoffdetergentien. Daneben weisen sie die eingangs geschilderten Nachteile der aus dem Stand der Technik bekannten Polyisobutenamin- und Polyetheramin-Detergentien nicht auf. Weiterhin sind sie mit den anderen Additiven ausreichend verträglich, so daß keine Entmischungseffekte in den Kraft- und Schmierstoffadditiv-Konzentraten auftreten. Auch verursacht ihr Viskositätsverhalten keine Formulierungsprobleme.

### Beispiele

Herstellung eines Adduktes von Propylenoxid an Polyisobutenalkohol (M_{N} = 550) und nachfolgende reduktive Aminierung

Ein gemäß der EP-A 277 345 aus hochreaktivem Polyisobuten durch Hydroformylierung hergestellter Polyisobutenalkohol mit einem zahlengemittelten Molekulargewicht M_{N} = 550 wurde unter üblichen Reaktionsbedingungen (Kaliumhydroxid-Katalyse, 135°C Umsetzungstemperatur) mit 25 mol Propylenoxid ("PO") umgesetzt.

300 g des so erhaltenen Adduktes wurden in einem Autoklaven mit 260 g flüssigem Ammoniak versetzt und bei einem Wasserstoffdruck von 200 bar in Gegenwart eines Nickel-, Kupfer-, Zirkonium- und Molybdänoxid enthaltenden Katalysators (hergestellt gemäß Beispiel 1-10 der EP-A 696 572) bei 210°C 10 Stunden lang erhitzt.

### Anwendungstechnische Untersuchung

In einem Mercedes Benz M 102 E-Motor wurde mit dem hergestellten Polyisobutenalkohol-Polyetheramin die Einlaßventilsauberkeit gemäß CEC-Methode F-05-A-93 getestet. Hierfür wurde ein marktüblicher Eurosuper Grundkraftstoff gemäß EN 228 eingesetzt, welcher das obige Polyisobutenalkohol-Polyetheramin als Detergenz in einer Dosierung von 400 mg/kg Ottokraftstoff enthielt.

Die nachfolgende Tabelle zeigt die Versuchsergebnisse:

| | Einlaßventilablagerungen [mg/Ventil] | | | | |
|---|---|---|---|---|---|
| | 1 | 2 | 3 | 4 | Mittelwert |
| ohne Additiv | 448 | 517 | 614 | 632 | 553 |
| mit Additiv | 2 | 42 | 14 | 38 | 24 |

## Patentansprüche

1. Polyalkenalkohol-Polyetheramine der allgemeinen Formel I
R¹-(CH₂)ₙ-(O-A)ₘ-NR²R³ (I)
in der
R¹ für einen von Isobuten und bis zu 20 Gew.-% n-Buten abgeleiteten Polybutyl- oder Polyisobutylrest mit einem zahlengemittelten Molekulargewicht von 300 bis 2500 steht,
R² und R³ gleich oder verschieden sein können und für Wasserstoff, aliphatische oder aromatische Kohlenwasserstoffreste, primäre oder sekundäre, aromatische oder aliphatische Aminoalkylenreste oder Polyaminoalkylenreste, Polyoxyalkylenreste, Heteroaryl- oder Heterocyclylreste stehen, oder gemeinsam mit dem Stickstoffatom, an das sie gebunden sind, einen Ring bilden, in dem noch weitere Heteroatome vorhanden sein können, wobei die maximale Anzahl der Kohlenstoffatome in R² und R³ zusammen 400 beträgt,
A 1,2-Propylen und/oder 1,2-Butylen bezeichnet,
m eine Zahl von 10 bis 45 bedeutet und
n die Zahl 0 oder 1 bezeichnet.

2. Polyalkenalkohol-Polyetheramine I nach Anspruch 1, bei denen R¹ für einen Polybutyl- oder Polyisobutylrest mit einem zahlengemittelten Molekulargewicht von 400 bis 850 steht.

3. Polyalkenalkohol-Polyetheramine I nach den Anspruch 1 oder 2, bei denen R² für Wasserstoff steht und R³ ebenfalls Wasserstoff oder einen Alkylrest mit insgesamt 2 bis 8 C-Atomen, welcher noch 1 bis 4 primäre, sekundäre und/oder tertiäre Stickstoffatome enthält, bedeutet.

4. Polyalkenalkohol-Polyetheramine I nach den Ansprüchen 1 bis 3, die von Polyalkenalkohol-Polyalkoxylaten der Formel II
R¹-(CH₂)ₙ-(O-A)ₘ-OH (II)
in der die Variablen R¹, A, m und n die oben genannte Bedeutung haben, abgeleitet sind mit der Maßgabe, daß der Sauerstoff im Oxalkylatrest -A-(O-A)ₘ₋₁-OH mindestens 16,5 Gew.-% des zahlengemittelten Molekulargewichts des Gesamtmoleküls der Verbindungen II ausmacht.

5. Polyalkenalkohol-Polyetheramine I nach den Ansprüchen 1 bis 4, bei denen die Molmasse des Oxalkylatrestes -A-(O-A)ₘ₋₁-OH im Polyalkenalkohol-Polyalkoxylat II das 1,5 bis 5fache der Molmasse des zugrundeliegenden Polyalkenalkohols R-(CH₂)ₙ-OH beträgt.

6. Verfahren zur Herstellung von Polyalkenalkohol-Polyetheraminen der allgemeinen Formel I gemäß den Ansprüchen 1 bis 5, **dadurch gekennzeichnet, daß** man Polyalkenalkohol-Polyalkoxylate der Formel II
R¹-(CH₂)ₙ-(O-A)ₘ-OH (II)
in der R¹, A, m und n die oben genannte Bedeutung haben, einer reduktiven Aminierung mit Ammoniak, Monoaminen oder polyaminen unter Verwendung hierfür üblicher Hydrier- bzw. Aminierungskatalysatoren unterwirft.

7. Verwendung von Polyalkenalkohol-Polyetheraminen I gemäß den Ansprüchen 1 bis 5 als Trägeröle, Detergentien oder Dispergatoren in Kraft- und Schmierstoffzusammensetzungen.

8. Kraft- und Schmierstoffadditiv-Konzentrate, enthaltend Polyalkenalkohol-Polyetheramine I gemäß den Ansprüchen 1 bis 5 in Mengen von 0,1 bis 80 Gew.-%.

9. Kraft- und Schmierstoffzusammensetzungen, enthaltend in wirksamen Mengen Polyalkenalkohol-Polyetheramine I gemäß den Ansprüchen 1 bis 5.

## Claims

1. A polyalkene alcohol polyetheramine of the formula I
R¹-(CH₂)ₙ-(O-A)ₘ-NR²R³ (I)
where
R¹ is a polybutyl or polyisobutyl radical derived from isobutene and up to 20% by weight of n-butene and having a number average molecular weight of from 300 to 2500,
R² and R³ may be identical or different and are hydrogen, aliphatic or aromatic hydrocarbon radicals, primary or secondary, aromatic or aliphatic aminoalkylene radicals or polyaminoalkylene radicals, polyoxyalkylene radicals, heteroaryl or heterocyclyl radicals or, together with the nitrogen atom to which they are bonded, form a ring in which further heteroatoms may be present, the maximum number of carbon atoms in R² and R³ together being 400,
A is 1,2-propylene and/or 1,2-butylene,
m is from 10 to 45 and
n is 0 or 1.

2. A polyalkene alcohol polyetheramine I as claimed in claim 1, in which R¹ is a polybutyl or polyisobutyl radical having a number average molecular weight of from 400 to 850.

3. A polyalkene alcohol polyetheramine I as claimed in claim 1 or 2, in which R² is hydrogen and R³ is likewise hydrogen or an alkyl radical having a total of 2 to 8 carbon atoms which further contains from 1 to 4 primary, secondary and/or tertiary nitrogen atoms.

4. A polyalkene alcohol polyetheramine I as claimed in any of claims 1 to 3, which is derived from a polyalkene alcohol polyalkoxylate of the formula II
R¹-(CH₂)ₙ-(O-A)ₘ-OH (II)
where R¹, A, m and n have the abovementioned meanings, with the proviso that the oxygen in the oxyalkylate radical -A-(O-A)ₘ₋₁-OH accounts for at least 16.5% by weight of the number average molecular weight of the total molecule of the compounds II.

5. A polyalkene alcohol polyetheramine I as claimed in any of claims 1 to 4, in which the molar mass of the oxyalkylate radical -A-(O-A)ₘ₋₁-OH in the polyalkene alcohol polyalkoxylate II is from 1.5 to 5 times the molar mass of the parent polyalkene alcohol R-(CH₂)ₙ-OH.

6. A process for preparing polyalkene alcohol polyetheramines of the formula I as claimed in any of claims 1 to 5, wherein polyalkylene alcohol polyalkoxylates of the formula II
R¹-(CH₂)ₙ-(O-A)ₘ-OH (II)
where R¹, A, m and n have the abovementioned meanings, are subjected to reductive amination with ammonia, monoamines or polyamines using hydrogenation or amination catalysts usual for this purpose.

7. The use of a polyalkene alcohol polyetheramine I as claimed in any of claims 1 to 5 as carrier oil, detergent or dispersant in fuel and lubricant compositions.

8. A fuel or lubricant additive concentrate containing a polyalkene alcohol polyetheramine I as claimed in any of claims 1 to 5 in an amount of from 0.1 to 80% by weight.

9. A fuel or lubricant composition containing an effective amount of a polyalkene alcohol polyetheramine I as claimed in any of claims 1 to 5.

## Revendications

1. Polyalcène-alcool-polyéther-amines de formule générale I
R¹-(CH₂)ₙ-(O-A)ₘ-NR²R³ (I)
dans laquelle
R¹ représente un groupe polyisobutyle ou polybutyle qui est dérivé de l'isobutène et de jusqu'à 20% en poids de n-butène et qui présente une masse moléculaire moyenne en nombre allant de 300 à 2 500,
R² et R³ peuvent être identiques ou différents et représentent un atome d'hydrogène, des groupes hydrocarbure aliphatique ou aromatique, des groupes polyaminoalkylène ou des groupes aminoalkylène primaire ou secondaire, aromatique ou aliphatique, des groupes polyoxyalkylène, des groupes hétérocyclyle ou hétéroaryle, ou bien représentent, conjointement avec l'atome d'azote auquel ils sont liés, un cycle qui présente éventuellement d'autres hétéroatomes, le nombre maximum des atomes de carbone étant de 400 pour l'ensemble constitué par R² et R³,
A représente un groupe 1,2-propylène et/ou 1,2-butylène,
m représente un nombre allant de 10 à 45, et
n représente le nombre 0 ou 1.

2. Polyalcène-alcool-polyéther-amines I selon la revendication 1, dans lesquelles R¹ représente un groupe polybutyle ou polyisobutyle qui présente une masse moléculaire moyenne en nombre allant de 400 à 850.

3. Polyalcène-alcool-polyéther-amines I selon la revendication 1 ou 2, dans lesquelles R² représente un atome d'hydrogène et dans lesquelles R³ représente également un atome d'hydrogène ou bien un groupe alkyle possédant au total 2 à 8 atomes de C qui comporte de plus 1 à 4 atomes d'azote primaires, secondaires et/ou tertiaires.

4. Polyalcène-alcool-polyéther-amines I selon les revendications 1 à 3, qui sont dérivées des polyalcoxylates de polyalcène-alcool de formule II
R¹-(CH₂)ₙ-(O-A)ₘ-OH (II)
dans laquelle les variables R¹, A, m et n prennent les significations susmentionnées, à condition que l'oxygène dans le groupe alcoxylate -A-(O-A)ₘ₋₁-OH représente au moins 16,5% en poids de la masse moléculaire moyenne en nombre de la totalité de la molécule des composés II.

5. Polyalcène-alcool-polyéther-amines I selon les revendications 1 à 4, dans lesquelles la masse moléculaire du groupe alcoxylate -A-(O-A)ₘ₋₁-OH dans le polyalcoxylate de polyalcène-alcool II est égale à 1,5 fois à 5 fois la masse moléculaire du polyalcène-alcool R-(CH₂)ₙ-OH d'origine.

6. Procédé pour la préparation de polyalcène-alcool-polyéther-amines de formule générale I selon les revendications 1 à 5, **caractérisé en ce que** l'on soumet à une amination réductrice, à l'aide d'ammoniac, de monoamines ou de polyamines en utilisant des catalyseurs d'hydrogénation ou d'amination habituels pour ce procédé, les polyalcoxylates de polyalcène-alcool de formule II
R¹-(CH₂)ₙ-(O-A)ₘ-OH (II)
dans laquelle les variables R¹, A, m et n prennent les significations susmentionnées.

7. Mise en oeuvre des polyalcène-alcool-polyéther-amines I selon les revendications 1 à 5, en tant qu'huile véhicule, additif dispersant ou agent dispersant dans des compositions de carburant et de lubrifiant.

8. Concentrés de carburant et de lubrifiant contenant, à raison de 0,1% à 80% en poids, les polyalcène-alcool-polyéther-amines I selon les revendications 1 à 5.

9. Compositions de carburant et de lubrifiant contenant les polyalcène-alcool-polyéther-amines I selon les revendications 1 à 5 en quantité efficace.
